# EUROPÄISCHE PATENTANMELDUNG

(11) **EP 0 715 948 A1**
(43) Veröffentlichungstag der Anmeldung: **12.06.1996**
(21) Anmeldenummer: 94890220.0
(22) Anmeldetag: 23.12.1994
(51) Int. Cl.: B29D 30/56

(54) **Verfahren zum Runderneuern eines abgefahrenen Reifens**

(30) Priorität: 06.12.1994 AT 2265/94
(71) Anmelder: Edler, Kurt, A-8600 Bruck/Mur (AT)
(72) Erfinder: Edler, Kurt, A-8600 Bruck/Mur (AT)
(74) Vertreter: Atzwanger, Richard, Dipl.-Ing. Patentanwalt

(57) **Zusammenfassung**

Verfahren zum Runderneuern eines abgefahrenen Reifen (2), wobei der Laufbelag des Reifens (2) abgeschliffen bzw. aufgerauht wird, weiters auf die Oberfläche des Reifens eine Schichte (3) eines Bindegummis aufgebracht wird, über den Bindegummi (3) ein in sich geschlossener Ring eines neuen Laufbelages (1) aufgebracht wird, die zwischen dem Bindegummi (3) und dem Laufbelag (1) befindliche Luft entfernt und der Laufbelag (1) durch Vulkanisation des zwischen diesem und dem Reifen (3) befindlichen Bindegummis (3) mit dem Reifen (2) verbunden wird. Dabei wird zwischen dem Bindegummi (3) und der Innenfläche des Laufbelages (1) eine Vielzahl von miteinander verbundenen Kanälen (12), welche im Abstand von den Seitenrändern des Laufbelages (1) enden und welche mit mindestens einer den Laufbelag (1) durchsetzenden Öffnung (14) in Verbindung stehen, vorgesehen, werden nach dem Aufbringen des Laufbelages (1) auf den Reifen (2) die Seitenränder (13) des Laufbelages (1) mit den Seitenflanken des Reifens (2) durch Vulkanisation des dort befindlichen Bindegummis luftdicht verbunden, wird die zwischen dem restlichen Laufbelag (1) und dem Bindegummi (3) befindliche Luft durch die Kanäle (12) und durch die mindestens eine im Laufbelag (1) befindliche Öffnung (14) hindurch abgesaugt und wird hierauf der restliche Laufbelag (1) durch Vulkanisation des zwischen diesem und dem Reifen (2) befindlichen Bindegummis (3) am Reifen (2) befestigt.

## Beschreibung

Die gegenständliche Erfindung betrifft ein Verfahren zum Runderneuern eines abgefahrenen Reifens, wobei der Laufbelag des Reifens abgeschliffen bzw. aufgerauht wird, weiters auf die Oberfläche des Reifens eine Schichte eines Bindegummis aufgebracht wird, über den Bindegummi ein in sich geschlossener Ring eines neuen Laufbelages aufgebracht wird, die zwischen dem Bindegummi und dem Laufbelag befindliche Luft entfernt und der Laufbelag durch Vulkanisation des zwischen diesem und dem Reifen befindlichen Bindegummis mit dem Reifen verbunden wird.

Es ist bekannt, abgefahrene Reifen für Kraftfahrzeuge dadurch einer weiteren Verwendung zugänglich zu machen, daß auf deren Oberfläche ein neuer Laufbelag aufgebracht wird. Dieser Maßnahme liegt die Erkenntnis zugrunde, daß durch die Benützung von Reifen der Laufbelag infolge des Abriebes abgetragen wird, wodurch die Reifen nicht mehr die erforderliche Profilierung aufweisen, daß jedoch das den Laufbelag tragende Gewebe, die sogenannte Karkasse, unbeschädigt ist. Soferne demnach auf die unbeschädigte Karkasse eines Fahrzeugreifens ein neuer Laufbelag aufgebracht wird, wird hierdurch ein Reifen geschaffen, welcher den verkehrstechnischen Anforderungen voll entspricht.

Die Aufbringung eines neuen Laufbelages auf einen abgefahrenen Reifen, welche als Runderneuerung bezeichnet wird, ist insbesondere bei Reifen mit großen Durchmessern wirtschaftlich. Es sind dies Reifen für Lastfahrzeuge, für verfahrbare Maschinen, wie Erdbewegungsfahrzeuge, Bagger, Planierfahrzeuge u.dgl.

Eine Runderneuerung von Fahrzeugreifen erfolgt dadurch, daß ein abgefahrener Reifen abgeschliffen bzw. aufgerauht wird. Hierauf wird auf die Oberfläche des Reifens eine Gummilösung aufgesprüht und wird auf diese eine Schichte eines Bindegummis, welcher für die Vulkanisation erforderlich ist, aufgebracht. Hierbei muß darauf geachtet werden, daß zwischen der Oberfläche des Reifens und dem Bindegummi keine Lufteinschlüsse verbleiben.

Dies wird dadurch gewährleistet, daß die Schichte des Bindegummis aufgewalzt wird.

In weiterer Folge wird auf den Reifen ein in sich geschlossener Ring eines neuen Laufbelages aufgebracht. Dies wird dadurch bewirkt, daß dieser ringförmige Laufbelag mittels einer mit Greifarmen ausgebildeten Streckenrichtung so stark radial gedehnt wird, daß er über den mit der Schichte an Bindegummi versehenen Reifen gebracht werden kann. Hierauf werden die sich zwischen dem Reifen und dem ringförmigen Laufbelag befindlichen Greifarme der Streckeinrichtung seitlich herausgezogen, wodurch der Laufbelag auf die Oberfläche des Reifens zur Anlage kommt und den Reifen dicht umschließt. In weiterer Folge wird der mit dem neuen Laufbelag versehene Reifen in einem Autoklaven unter einem Druck von etwa 5 bar einer Temperatur von etwa 100°C ausgesetzt, wodurch der Bindegummi vulkanisiert wird. Hierdurch wird der neue Laufbelag mit der Karkasse des abgefahrenen Reifens dauerhaft verbunden.

Eine wesentliche Voraussetzung dafür, daß die erforderliche Verbindung des neuen Laufbelages mit der Karkasse erzielt wird, besteht darin, daß zwischen dem Bindegummi und dem ringförmigen Laufbelag keine Einschlüsse an Luft verbleiben, da andernfalls in den Bereichen von Lufteinschlüssen keine Verbindung des Laufbelages mit der Karkasse bewirkt wird. Um derartige Lufteinschlüsse, aufgrund welcher runderneuerte Reifen den verkehrstechnischen Anforderungen nicht entsprechen, vermeiden zu können, sind mehrere Maßnahmen vorgeschlagen worden.

So ist es aus der AT-PS 305 061, aus der AT-PS 353 119 und aus der AT-PS 357 423 bekannt, den mit dem Laufbelag versehenen Reifen teilweise oder vollständig mittels einer elastischen, luftdicht verschlossenen Hülle zu umgeben und den Innenraum der Hülle vor und während des Vulkanisiervorganges zu evakuieren. Dabei tritt jedoch die Schwierigkeit auf, daß durch den außerhalb der Hülle herrschenden Luftdruck die sich keilförmig verjüngenden Seitenränder des Laufbelages an die Seitenflanken des Reifens so stark angepreßt werden, daß sie einen luftdichten Abschluß bewirken, wodurch trotz des innerhalb der Hülle herrschenden Unterdruckes zwischen dem Laufbelag und dem Reifen befindliche Lufteinschlüsse nicht beseitigt werden. Zudem erfordert dieses Verfahren eine aus einem gummiartigen Material gefertigte, den Reifen zumindest teilweise umgebende Hülle, welche im Autoklaven gleichfalls einer Erhitzung unterzogen wird, wodurch sie so stark belastet wird, daß sie nur für eine beschränkte Anzahl von Einsätzen geeignet ist. Da hierdurch die Hülle brüchig und luftdurchlässig wird, kann sie während des Vulkanisiervorganges von Luft durchsetzt werden, welche zwischen die Karkasse und den Laufbelag eintritt, wodurch gleichfalls bei der Runderneuerung Fehler bedingt werden können. Da bei Reifen mit großen Durchmessern, welche für Runderneuerungen vorgesehen sind, entsprechend große Hüllen erforderlich sind, wird zudem hierdurch ein großer Materialeinsatz verursacht, wodurch dieses Verfahren gleichfalls unwirtschaftlich ist.

Aus der AT-PS 353 119 ist es weiters bekannt, die Innenfläche des Laufbelages mit einer Vielzahl von Kanälen auszubilden, über welche zwischen dem Laufbelag und dem Reifen befindliche Luft herausgesaugt werden kann. Auch hierbei ist jedoch eine den Reifen vollständig umgebende und luftdicht verschlossene Hülle erforderlich, welche nur für eine beschränkte Anzahl von Einsätzen geeignet ist.

Weiters ist es aus der AT-PS 296 799 bekannt, den ringförmigen Laufbelag auf den Reifen innerhalb eines evakuierbaren Behälters aufzubringen. Hierfür wird der Reifen in den Behälter eingebracht, wird der Laufbelag radial außerhalb des Reifens angeordnet und wird hierauf der Behälter verschlossen sowie evakuiert. Erst hierauf wird der Laufbelag auf den Reifen aufgebracht. Hierdurch werden zwischen dem Reifen und dem Laufbelag befindliche Lufteinschlüsse mit Sicherheit vermieden. Diesem Verfahren haftet jedoch der Nachteil an, daß dessen Durchführung deshalb einen hohen technischen Aufwand bedingt, da hierfür ein mit einer Streckeinrichtung ausgebildeter, evakuierbarer Behälter erforderlich ist.

Der gegenständlichen Erfindung liegt demnach die Aufgabe zugrunde, ein Verfahren zu schaffen, durch welches die dem bekannten Stand der Technik anhaftenden Nachteile vermieden werden. Dies wird erfindungsgemäß dadurch erzielt, daß zwischen dem Bindegummi und der Innenfläche des ringförmigen Laufbelages eine Vielzahl von miteinander verbundenen Kanälen, welche im Abstand von den Seitenrändern des Laufbelages enden und welche mit mindestens einer den Laufbelag durchsetzenden Öffnung in Verbindung stehen, vorgesehen wird, daß nach dem Aufbringen des Laufbelages auf den Reifen die Seitenränder des Laufbelages mit den Seitenflanken des Reifens durch Vulkanisation des dort befindlichen Bindegummis luftdicht verbunden werden, daß hierauf die zwischen dem restlichen Laufbelag und dem Bindegummi befindliche Luft durch die Kanäle und durch die mindestens eine im Laufbelag befindliche Öffnung hindurch abgesaugt wird und daß hierauf der restliche Laufbelag durch Vulkanisation des zwischen diesem und dem Reifen befindlichen Bindegummis am Reifen befestigt wird.

Dem erfindungsgemäßen Verfahren liegt die Erkenntnis zugrunde, daß diejenige Funktion, welche gemäß dem bekannten Stand der Technik von einer den Reifen umgebenden Hülle erfüllt wird, vom ringförmigen Laufbelag selbst erfüllt werden kann, soferne dieser längs seiner Seitenränder mit dem Reifen luftdicht verbunden wird. Dadurch, daß erfindungsgemäß zwischen dem Reifen und dem Laufbelag befindliche Lufteinschlüsse durch eine den Laufbelag durchsetzende Öffnung entfernt werden können, soferne die Seitenränder des Laufbelages mit dem Reifen luftdicht verbunden sind, kann auf die Verwendung einer Hülle verzichtet werden, wodurch die dieser Hülle anhaftenden Nachteile vermieden werden. Da zudem zwischen dem Laufbelag und dem Reifen eine Vielzahl von ineinander übergehenden Kanälen vorgesehen ist, werden jegliche Lufteinschlüsse mit Sicherheit entfernt, wodurch aufgrund dieses Verfahrens sämtliche den bekannten Verfahren anhaftenden Nachteile vermieden werden.

Vorzugsweise ist an der Innenseite des Laufbelages eine Vielzahl von aneinander anschließenden Kanälen, welche im Abstand von den Seitenrändern des Laufbelages enden, vorgesehen, welche insbesondere als einander kreuzende, netzartige Kanäle ausgebildet sind.

In analoger Weise kann sich an der Oberseite des auf den Reifen aufgebrachten Bindegummis eine Vielzahl von miteinander verbundenen Kanälen befinden. Diese können dabei dadurch hergestellt werden, daß auf den Reifen eine erste Schichte aus Bindegummi aufgebracht wird, auf welche eine zweite Schichte von vorzugsweise streifenförmigen Abschnitten des Bindegummis aufgebracht wird, wobei sich zwischen den Abschnitten Kanäle befinden. So kann die erste Schichte des Bindegummis plattenförmig sein und kann die zweite Schichte des Bindegummis durch Streifen gebildet sein, welche auf die erste Schichte in Form einer mehrfach unterbrochenen Spirale aufgebracht werden.

Vorzugsweise ist weiters die Innenseite des Laufbelages mit mindestens einem quer verlaufenden Kanal ausgebildet, von welchem die den Laufbelag durchsetzende Öffnung ausgeht. Nach einer bevorzugten Ausführungsform wird der mit dem Laufbelag versehene Reifen in einen Autoklaven eingebracht und erfolgt die Absaugung der zwischen dem Laufbelag und dem Bindegummi befindlichen Luft auch während des im Autoklaven erfolgenden Vulkanisiervorganges.

Das erfindungsgemäße Verfahren ist nachstehend anhand von in der Zeichnung dargestellten Ausführungsbeispielen näher erläutert. Es zeigen:
- Fig. 1: einen Laufbelag zur Verwendung beim erfindungsgemäßen Verfahren, in axonometrischer Darstellung,
- Fig. 1a: einen Abschnitt des Laufbelages nach Fig. 1, in axonometrischer Darstellung und im Schnitt,
- die Fig. 2 und 2a: zwei Ausführungsformen eines mit einem Bindegummi beschichteten Reifens, im Schnitt,
- Fig. 3: einen Reifen mit einem Laufbelag, in einem ersten Stadium des erfindungsgemäßen Verfahrens, im Schnitt,
- Fig. 4: den Reifen mit dem Laufbelag gemäß Fig. 4 in einem zweiten Stadium des erfindungsgemäßen Verfahrens, im Schnitt, und

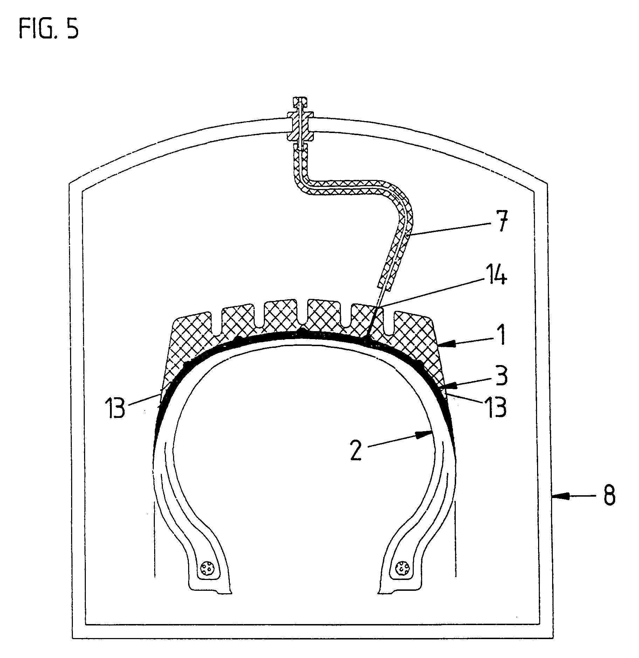

- Fig. 5: einen Autoklaven mit einem in diesem angeordneten Reifen, im Schnitt.

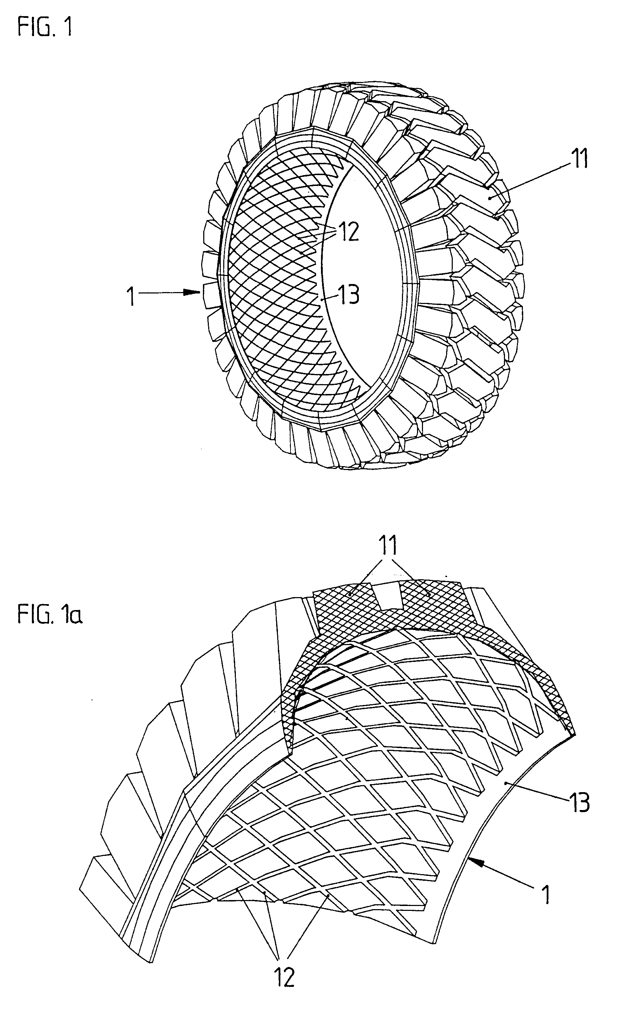

Wie dies in den Fig. 1 und 1a dargestellt ist, ist ein Laufbelag 1, welcher für die Runderneuerung eines abgefahrenen und abgeschliffenen Reifens herangezogen wird, als geschlossener Ring ausgebildet, welcher an seiner Außenseite mit einer Profilierung in Form einer Vielzahl von Stollen 11 und an seiner Innenseite mit einer Vielzahl von einander kreuzenden und damit netzartig ineinander übergehenden Kanälen 12 ausgebildet ist. Dabei enden die Kanäle 12 im Abstand von den beiden Seitenrändern 13 des Laufbelages 1, wodurch längs der Seitenränder 13 Streifen gebildet sind, welche eine ebene Oberfläche aufweisen.

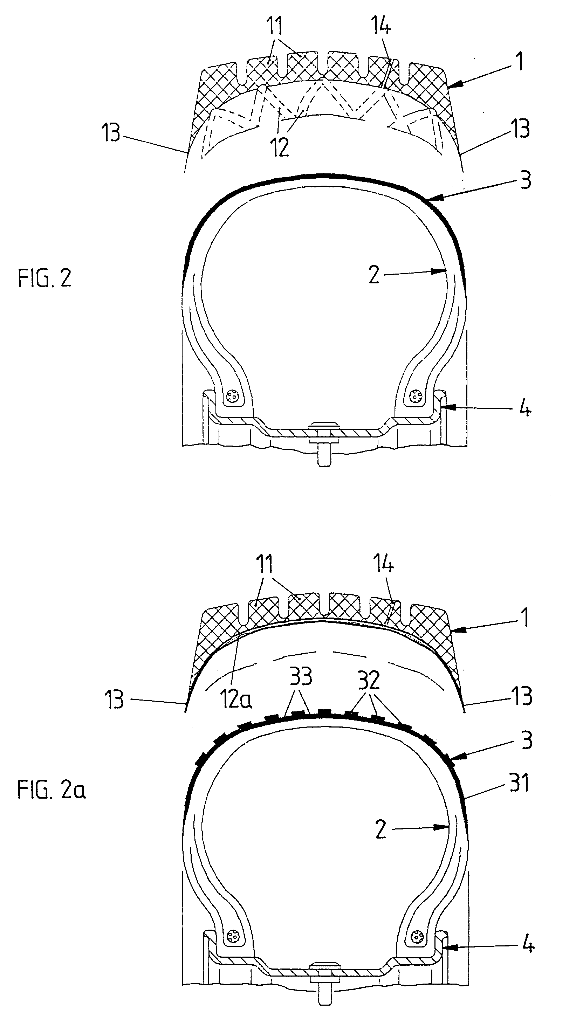

In Fig. 2 ist weiters ein Reifen 2 dargestellt, welcher auf einer Felge 4 montiert ist. Auf die abgeschliffene und aufgerauhte Oberfläche des Reifens 2 ist eine Schichte 3 eines Bindegummis aufgebracht. Da die Schichte 3 auf den Reifen 1 aufgewalzt ist, werden Lufteinschlüsse vermieden. Wie weiters aus Fig. 2 ersichtlich ist, ist der Laufbelag 1 mit mindestens einer diesen durchsetzenden Öffnung 14 ausgebildet, welche zu den an der Innenseite befindlichen Kanälen 12 führt.

In Fig. 2a ist eine Ausführungsvariante dargestellt, bei welcher die Innenfläche des Laufbelages 1 ohne ineinander übergehende Kanäle ausgebildet ist. Demgegenüber sind auf den Reifen 2 zwei Schichten 31 und 32 an Bindegummi 3 aufgebracht, wobei die erste Schichte 31, welche an die Oberseite des Reifens 2 anliegt, durchgehend ist, wogegen die darüber befindliche Schichte 32 aus einer Vielzahl voneinander im Abstand befindlicher Streifen 32 besteht, welche spiralig um den Reifen 2 herum verlaufen, wodurch dazwischen Kanäle 33 gebildet sind. Dabei mündet die den Laufbelag 1 durchsetzende Öffnung 14 in einem einzigen, sich an der Innenseite des Laufbelages 1 quer erstreckenden Kanal 12a, welcher gleichfalls im Abstand von den Seitenrändern 13 des Laufbelages 1 endet.

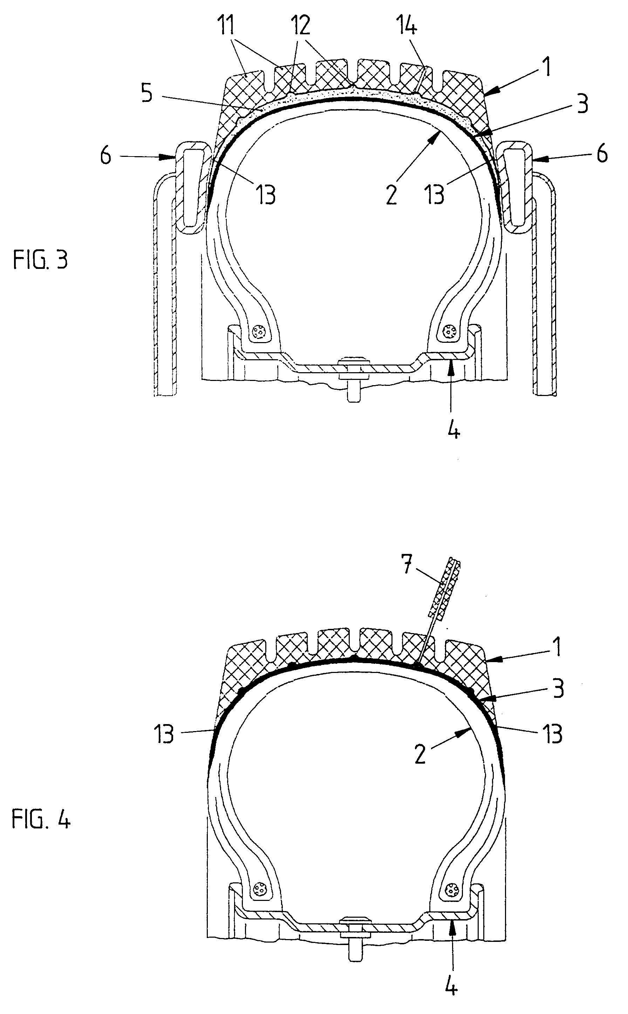

Wie dies aus Fig. 3 ersichtlich ist, wird der Laufbelag 1 auf den Reifen 2 aufgebracht, wobei sich zwischen dem Reifen 2 und dem Laufbelag 1 Lufteinschlüsse 5 befinden. In der Folge werden die Seitenränder 13 mittels ringförmiger Heizeinrichtungen 6, welche z.B. von Heißdampf durchströmt sind, mit den Flanken des Reifens 2 durch Vulkanisation des dazwischen befindlichen Bindegummis luftdicht verbunden. In der Folge wird, wie dies in Fig. 4 dargestellt ist, über eine Saugleitung 7, welche an eine Evakuiereinrichtung angeschlossen ist, die zwischen dem Laufbelag 1 und dem Reifen 2 befindliche Luft herausgesaugt. Da die Seitenränder 13 des Laufbelages 1 mit dem Reifen 2 luftdicht verbunden sind, kann längs dieser keine Luft nachströmen. Da sich weiters zwischen dem Laufbelag 1 und dem Reifen 2 eine Vielzahl von Kanälen 12 befindet, werden durch den Evakuiervorgang jegliche zwischen dem Laufbelag 1 und dem Reifen 2 befindliche Lufteinschlüsse entfernt.

In der Folge wird der Reifen 2 in einen Autoklaven 8 eingebracht, in welchem der gesamte zwischen dem Laufbelag 1 und dem Reifen 2 befindliche Bindegummi 3 vulkanisiert wird, wodurch der Laufbelag 1 am Reifen 2 befestigt wird. Da die zur Evakuiereinrichtung führende Saugleitung 7 die Wandung des Autoklaven 8 durchsetzt, kann die Evakuierung auch während des Vulkanisiervorganges fortgesetzt werden.

## Patentansprüche

1. Verfahren zum Runderneuern eines abgefahrenen Reifens, wobei der Laufbelag des Reifens abgeschliffen bzw. aufgerauht wird, weiters auf die Oberfläche des Reifens eine Schichte eines Bindegummis aufgebracht wird, über den Bindegummi ein in sich geschlossener Ring eines Laufbelages aufgebracht wird, die zwischen dem Bindegummi und dem Laufbelag befindliche Luft entfernt und der Laufbelag durch Vulkanisation des zwischen diesem und dem Reifen befindlichen Bindegummis mit dem Reifen verbunden wird, dadurch gekennzeichnet, daß zwischen dem Bindegummi (3) und der Innenfläche des Laufbelages (1) eine Vielzahl von miteinander verbundenen Kanälen (12), welche im Abstand von den Seitenrändern (13) des Laufbelages enden und welche mit mindestens einer den Laufbelag (1) durchsetzenden Öffnung (14) in Verbindung stehen, vorgesehen wird, daß nach dem Aufbringen des Laufbelages (1) auf den Reifen (2) die Seitenränder (13) des Laufbelages mit den Seitenflanken des Reifens (2) durch Vulkanisation des dort befindlichen Bindegummis luftdicht verbunden werden, daß die zwischen dem restlichen Laufbelag (1) und dem Bindegummi (3) befindliche Luft durch die Kanäle (12) und durch die mindestens eine im Laufbelag (1) befindliche Öffnung (14) hindurch abgesaugt wird und daß hierauf der Laufbelag (1) durch Vulkanisation des zwischen diesem und dem Reifen (2) befindlichen Bindegummis am Reifen (2) befestigt wird.

2. Verfahren nach Patentanspruch 1, dadurch gekennzeichnet, daß an der Innenseite des Laufbelages (1) eine Vielzahl von aneinander anschließenden Kanälen (12), welche im Abstand von den Seitenrändern (13) des Laufbelages (1) enden, vorgesehen ist.

3. Verfahren nach Patentanspruch 2, dadurch gekennzeichnet, daß an der Innenseite des Laufbelages (1) eine Vielzahl von einander kreuzenden, netzartigen Kanälen (12) vorgesehen ist.

4. Verfahren nach einem der Patentansprüche 1 bis 3, dadurch gekennzeichnet, daß sich an der Oberseite des auf den Reifen (2) aufgebrachten Bindegummis (3) eine Vielzahl von miteinander verbundenen Kanälen (33) befindet.

5. Verfahren nach Patentanspruch 4, dadurch gekennzeichnet, daß auf den Reifen (2) eine erste Schichte (31) an Bindegummi aufgebracht wird, auf welche eine zweite Schichte (32) von vorzugsweise streifenförmigen Abschnitten des Bindegummis aufgebracht wird, wobei sich zwischen den Abschnitten Kanäle (33) befinden, welche miteinander verbunden sind.

6. Verfahren nach Patentanspruch 5, dadurch gekennzeichnet, daß die erste Schichte (31) des Bindegummis plattenförmig ist und daß die zweite Schichte (32) des Bindegummis durch Streifen gebildet ist, welche auf die erste Schichte (31) in Form einer mehrfach unterbrochenen Spirale aufgebracht werden.

7. Verfahren nach einem der Patentansprüche 4 bis 6, dadurch gekennzeichnet, daß die Innenseite des Laufbelages (1) mit mindestens einem quer verlaufenden Kanal (12a) ausgebildet ist, von welchem die den Laufbelag (1) durchsetzende Öffnung (14) ausgeht.

8. Verfahren nach einem der Patentansprüche 1 bis 2, dadurch gekennzeichnet, daß der mit dem Laufbelag (1) versehene Reifen (2) in einen Autoklaven (8) eingebracht wird und die Absaugung der zwischen dem Laufbelag (1) und dem Bindegummi (3) befindlichen Luft auch während des Vulkanisiervorganges erfolgt.
